# EUROPEAN PATENT SPECIFICATION

(11) **EP 1 989 774 B1**
(45) Date of publication and mention of the grant of the patent: **26.10.2016**
(21) Application number: 07715260.1
(22) Date of filing: 28.02.2007
(51) Int. Cl.: H02J 7/00

(54) **BATTERY CHARGER**
BATTERIELADEGERÄT
CHARGEUR DE BATTERIE

(30) Priority: 28.02.2006 JP 2006051581
(43) Date of publication of application: 12.11.2008
(73) Proprietor: HITACHI KOKI CO., LTD., Tokyo 108-6020 (JP)
(72) Inventor: FUNABASHI, Kazuhiko, Ibaraki 312-8502 (JP); OOMORI, Katsuhiro, Ibaraki 312-8502 (JP); HANAWA, Hiroyuki, Ibaraki 312-8502 (JP); WATANABE, Shinji, Ibaraki 312-8502 (JP)
(74) Representative: Strehl Schübel-Hopf & Partner
(86) International application number: PCT/JP2007/054369
(87) International publication number: WO 2007/102523

(56) References cited:
- EP-A- 1 317 045
- WO-A-2004/059757
- US-A- 5 619 116
- US-A1- 2005 168 194
- US-A1- 2005 280 393

## Description

### Technical Field

The present invention relates to a battery charger for charging a battery device using a stackable cell assembly technology, abbreviate it as SCAT, hereinafter.

### Background Art

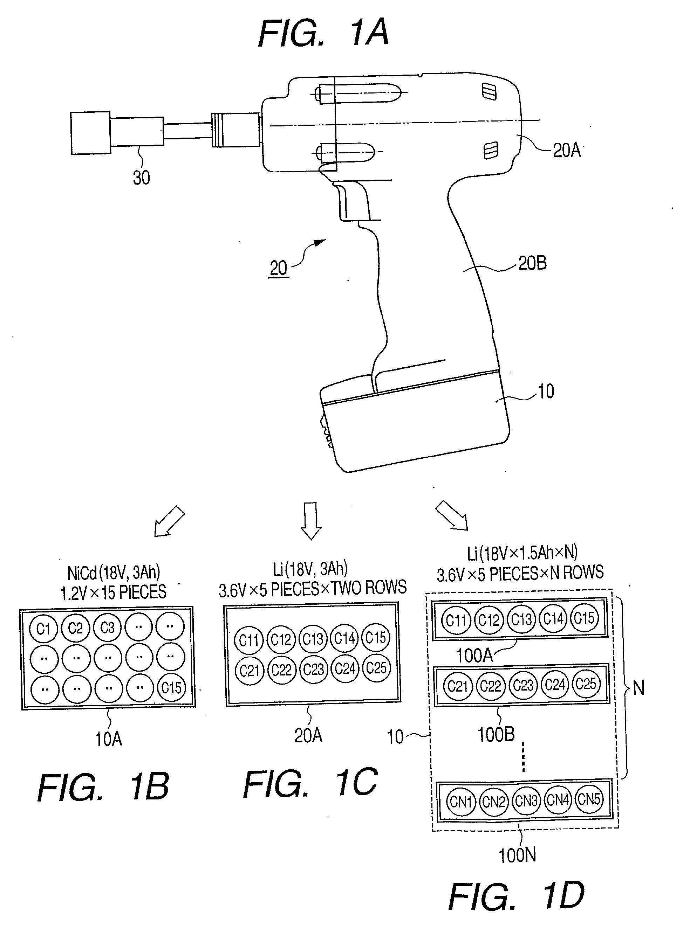

Initially, the concept of the SCAT proposed by the inventor of the present invention will be described by referring to Fig. 1A-1D.

Acordless electric tool 20, such as an electric driver, an electric drill and an impact tool has a motor for generating a rotating power and is designed to reduce the rotating speed thereof by a speed reducing mechanism, and then, transmit the rotating power to a tip tool.

In Fig. 1A, reference numeral 20 designates a cordless electric tool. The cordless electric tool includes a main body part 20A and a handle part 20B. A tool tip 30 is attached to the end of the main body part 20A. One end of the handle part 20B is connected to the main body part 20A and a battery device 10 is attached to the other end part.

In these cordless electric tools, a rated voltage (volt, abbreviate it as V, hereinafter), a current capacity (ampere time, abbreviate it as Ah, hereinafter) are all determined by a maker. The rated voltage (V) is determined on the basis of the level of a rotating power transmitted to the tool and a voltage necessary for driving a motor for generating the rotating power. Further, the current capacity (Ah) is determined on the basis of a quantity of a load current of the motor and a specification of time during which the tool can be continuously used. For instance, the electric tool on which a battery device of 3 Ah has a feature that the current of 3A can be continuously supplied to the motor for one hour.

The above-described rated voltage and the current capacity are determined for each of all tools by the maker. A user cannot arbitrarily change or reform these values.

As compared therewith, in the SCAT, an electric tool of a new concept is proposed in which the rated voltage (V) of the electric tool is determined by the maker, however, the current capacity (Ah) can be arbitrarily selected by a user.

Such a new concept is desirable from the viewpoint that one cordless electric tool can meet various kinds of needs of the user. When the electric tool is used in a narrow place such as in the ceiling, user desires more that the electric tool is light as much as possible than that the current capacity is large. However, nearly half of the weight of a usual cordless electric tool is occupied by a battery pack, that is, the battery device. Since only the battery pack adapted to the rated voltage and the current capacity of the electric tool can be attached to the electric tool, the weight of the electric tool cannot be changed in any work.

On the other hand, when the same operation is continuously carried out for a long time, the electric tool that can be used without frequently charging the battery pack is desired. However, since the current capacity is previously determined in the usual electric tool, the battery pack having the current capacities of different values cannot be employed depending on works.

Since there are many types of cordless electric tools, the tools having different specifications can be of course used depending on the works, however, the user does not desire to prepare many electric tools or carry these tools to a working spot.

The SCAT meets such various kinds of needs of the user. As one example, a case that the rated voltage of the electric tool is 18V and the current capacity is 3 Ah is adopted and the difference between the usual battery device and the battery device using the SCAT technology is described.

Fig. 1B shows a structure of the usual battery device using NiCd cells having a nominal voltage of 1.2 V as battery cells. This battery device is formed by connecting 15 cells C1 to C15 in series and accommodating the connected cells in a battery pack receptacle 10A.

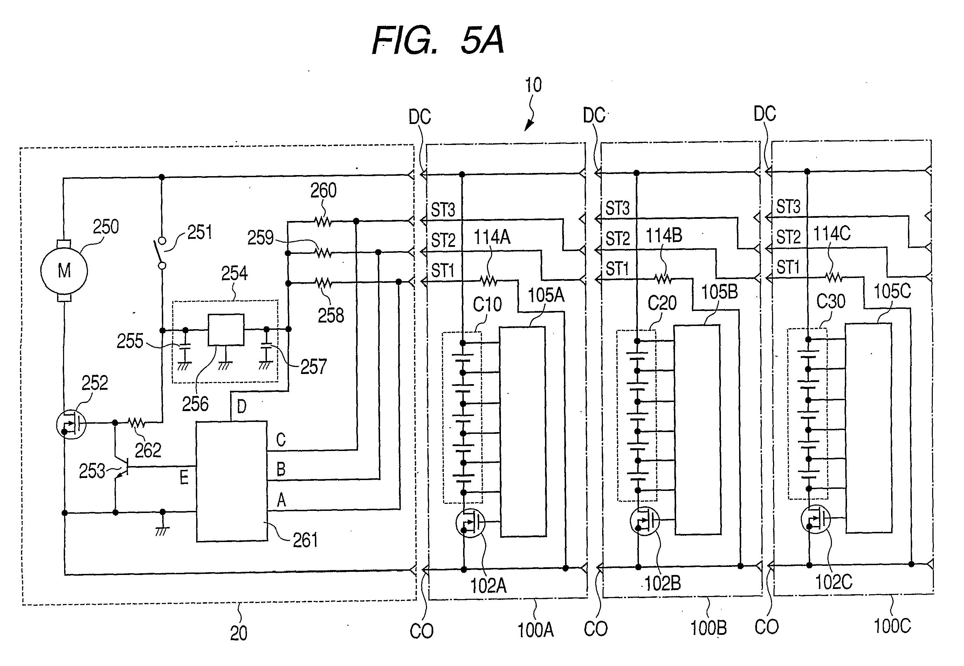

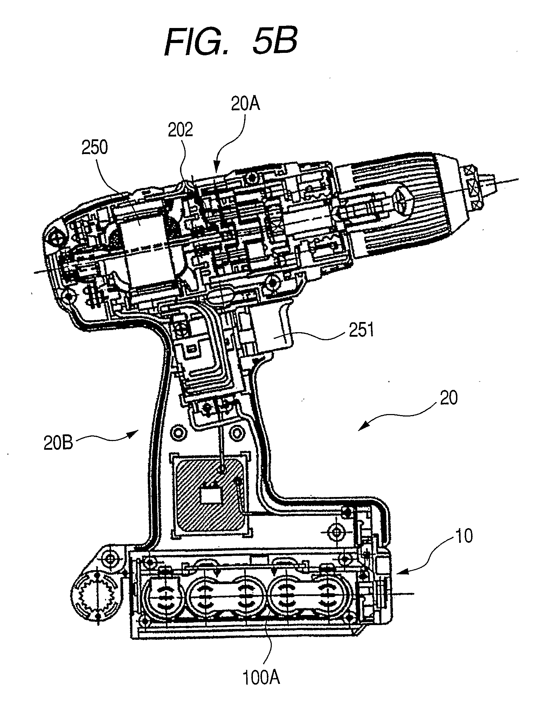

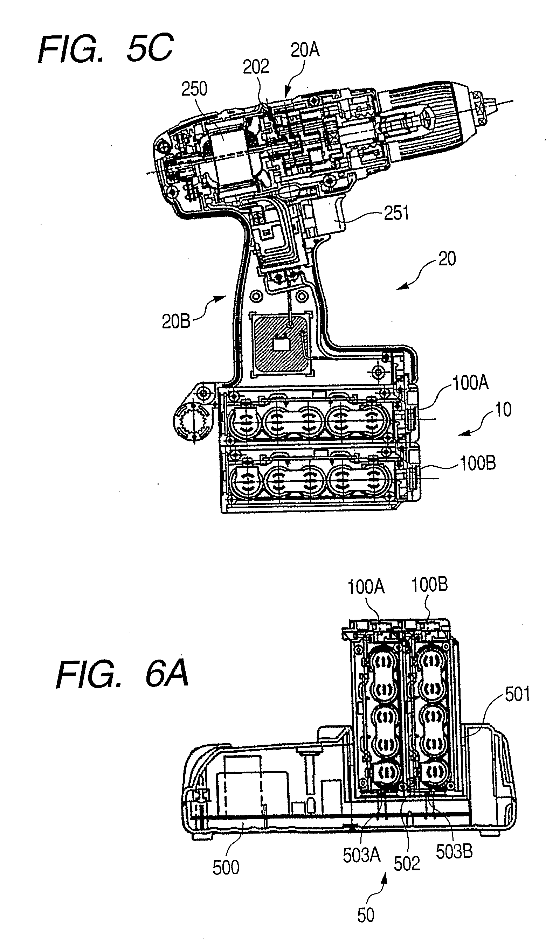

On the other hand, when a lithium cell is used as a battery cell, since its nominal voltage is large as high as 3.6 V and its current capacity is small as low as about 1.5 Ah, as shown in Fig. 1C, 5 cells C 11 to C15 are connected in series and 5 cells C21 to C25 are similarly connected in series, a group of the cells connected in series is connected in parallel with a group of the cells connected in series to accommodate a total of 10 battery cells in a battery pack receptacle 20A and thus form the battery device.

As compared therewith, when the SCAT technology is employed, the maker prepares cell assemblies in which the number of cells necessary for generating the rated voltage of the cordless electric tool are accommodated as shown in Fig. 1D. For instance, when the cell assembly is formed with the lithium cells, 5 battery cells C11 to C15 having the nominal voltage of 3. 6 V are connected in series and the battery cells connected in series are accommodated in a receptacle to form the cell assembly 100A. Similarly, a cell assembly 100B is formed by connecting battery cells C21 to C25 in series and accommodating the battery cells connected in series in the assembly receptacle. When these cell assemblies 100A, 100B, ... . .100N are stacked, the cell assemblies are designed to be respectively connected in parallel.

When the user uses one cell assembly, the user can use the cell assembly as the battery device of 1.5 Ah. When the user uses the two cell assemblies, the user can use them as the battery device of 3 Ah. That is, the value of the current capacity (Ah) of the cordless electric tool can be selectively determined by the user.

To form the cell assembly by using the SCAT technology, the lithium cell having the large nominal voltage and the small current capacity is desirably employed as the cell. Thus, the weight of the cell assembly can be reduced and the current capacity can be selected by the user further little by little.

Here, the lithium cell indicates a vanadium/lithium cell, a manganese lithium cell or the like and means any of cells having a lithium /aluminum alloy for a cathode and using organic electrolyte. Further, a lithium ion cell ordinarily indicates a cell using cobaltic lithium for an anode and graphite for a cathode and organic electrolyte as electrolyte. In this specification, for convenience sake, organic electrolyte secondary cells including the lithium cell and the lithium ion cell are generally referred to only as the lithium cells.

As a related art similar to the SCAT technology, a battery device has been already proposed or developed that is formed so that a plurality of cells capable of being charged can be connected in parallel in a portable electronic device such as a camera or a personal computer. For instance, Patent Document 1 discloses a battery pack used for a camera on which the desired number of auxiliary cells can be amounted in addition to a main cell. However, in the case of the cordless electric tool, since technical problems different from those of an OA device or the portable electronic device exist, when the battery device for the electric tool is developed by using the SCAT technology, these technical problems need to be solved.

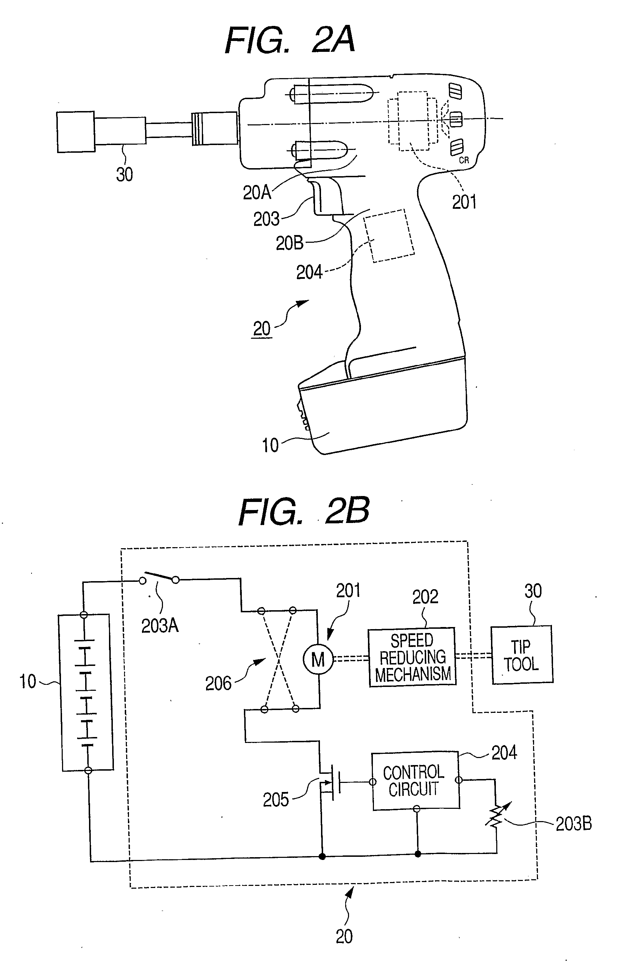

One example of the usual cordless electric tool will be initially described by referring to Figs. 2A and 2B.

Fig. 2A shows an external appearance of the usual cordless electric tool and Fig. 2B shows a schematic electric circuit of the electric tool. The electric tool 20 such as an electric driver, an electric drill, an electric wrench or the like includes a main body part 20A and a handle part 20B connected to the main body part 20A. A battery device 10 is connected to an end part of the handle part 20B.

In the housing of the main body part 20A, a dc motor 201 for generating a rotating power and a speed reducing mechanism part 202 for reducing the rotating speed of the dc motor 201 are accommodated. To an end of the speed reducing mechanism part 202, a tip tool 30 such as a drill, a driver or the like is attached. In the case of an impact tool, a hitting mechanism part (not shown in the drawing) such as a hammer is provided between the speed reducing mechanism part 202 and the tip tool 30. Further, a trigger 203 is provided near a connecting part of the main body part 20A and the handle part 20B.

As shown in Fig. 2B, between both the terminals of the battery device 10, a trigger switch 203A, a motor 201 and a switching element 205 such as an FET are connected in series. To the gate of the switching element 205, a pulse signal whose pulse width is modulated by a control circuit 204 is applied. Further, to the control circuit 204, a variable resistor 203B whose resistance value is changed in association with the operation of the trigger switch 203A is connected. The resistance value is changed so that the pulse width of an output pulse of the control circuit 204 is changed.

Now, when the trigger 203 shown in Fig. 2A is pulled, the switch 203A shown in Fig. 2B is closed so that a driving voltage is applied to the motor 201 from the battery device 10 only during a period when the switching element 205 is turned on to rotate the motor 201. The rotating power is transmitted to the tip tool 30 through the speed reducing mechanism 202.

When the trigger 203 is more deeply pulled, the resistance value of the variable resistor 203B is changed. Thus, the pulse width of a pulse applied to the gate of the switching element 205 from the control circuit 204 is increased. Accordingly, a period during which the switching element 205 is turned on is lengthened and the average value of the driving voltage applied to the motor 201 is increased. Therefore, the rotating speed of the motor 201 can be controlled in accordance with a quantity of pulling of the trigger 203 and the magnitude of the rotating power transmitted to the tip tool 30 can be controlled. Switches 206 connected to both the ends of the motor 201 are switched so that the rotating direction of the motor 201 can be switched to a normal direction and a reverse direction.

[Patent Document 1] JP-A-2001-229891

Document WO2004/059757 discloses:
A battery charger (700) comprising: - an accommodating part for accommodating an assembly including a group of cells having a plurality of cells and first (BATT.A) and second (BATT.B) cell assemblies respectively having charging terminals for charging the group of cells; - a first terminal plate (BATT_A) formed in the surface of the accommodating part to come into contact with the charging terminal of the first cell assembly and a second terminal plate (BATT_B) coming into contact with the second cell assembly; - a switching element (SW5) for interrupting voltage from an ac power source (732); - a unit (SW6, 708) for rectifying and smoothing the voltage interrupted by the switching element (SW5); and - a unit (707, 708, SW3, SW4) for applying the smoothed dc voltage respectively to the first and second terminal plates.

### Disclosure of Invention

According to the study of the inventor of the present invention, when the battery device using the SCAT technology is employed in the above-described cordless electric tool, below-described technical problems are considered to arise.

### (1) Countermeasure for over-current

The battery device 10 of the cordless electric tool 20 is used as a power source for supplying the driving voltage to the motor 201. The motor 201 is used to generate the rotating power transmitted to the tip tool 30. As the tip tool 30, there is a drill or a driver. Since the tip tool is used for machining a material to be worked, the level of a load exerted on the tip tool 30 causes a large variation that may not arise in the camera or the personal computer. When the variation of the load exerted on the tip tool 30 is large, the variation of a load current of the motor 201 is naturally large. Accordingly, there is a risk that an over-current is also supplied to the battery device 10.

Assuming that a terminal voltage of the battery device 10 is V, a counter electromotive force of the motor 201 is E and an armature resistance of the motor 201 is Ra, a current Ia supplied to the winding of the armature of the motor 201 is represented by Ia = (V-E)/Ra. Accordingly, for instance, when the tip tool 30 engages with the material to be worked so that the rotating speed of the motor 201 come near to 0, the counter electromotive force E may also instantaneously come near to 0 and Ia may abruptly increase to several 10A or so.

When cell assemblies generating large voltage as high as 18V or 24V are connected in parallel with each other, if there is an unbalance in a quantity of charging between the cell assemblies, there is a risk that an over-current is supplied. For instance, when the cell assembly having 5 battery cells that are fully charged is connected in parallel with the cell assembly having 5 battery cells a quantity of charging of which is 0 %, there is a possibility that a current of several 10A or so is supplied to a closed circuit having the two cell assemblies.

However, for instance, when a lithium cell having a current capacity of 1.5 Ah is used as the battery cell, if a large current as high as, for instance, about 30A is supplied even for a short time, the battery cell may be possibly broken.

Further, similarly when the cell assembly having the fully charged battery cells is connected in parallel with the cell assembly having the battery cells a quantity of charging of which is 0 % and the assemblies are connected to an electric tool, a burden of the variation of the load current of the motor is exerted on one cell assembly, so that the cell assembly itself may be possibly damaged.

As described above, in the battery device of the electric tool using the SCAT technology, since there is a possibility that the over-current is supplied to the battery device due to various causes, the countermeasures therefor need to be considered. Especially, when the lithium cell is used, the current capacity (Ah) of the battery cell is lower than that of an NiCd cell. Thus, it is important to consider a countermeasure for the over-current.

### (2) Selection of assembly adapted to characteristics of electric tool

The cordless electric tool includes many kinds of electric tools such as the electric driver or the electric drill, an electric circular saw, an impact driver or the like, however, there is a wide range in the variation of load depending on the kinds of the tools. For instance, in the electric drill, when the tip tool engages with the material to be worked, the load current of the motor may become 6 to 7 times as large as that of an ordinary time. On the other hand, in the case of the impact driver, since the variation of the load is relatively small, the variation of the load current of the motor is also relatively small. As described above, a phenomenon that the degrees of the variation of the load are extremely different depending on the kinds of the tools does not appear in portable electronic devices such as a camera or OA devices.

In the battery device for the usual electric tool, a maker side determines the rated voltage and the current capacity of a battery pack by considering such a difference in load variation.

However, in the battery device using the SCAT technology, since the value of the current capacity can be selected by a user, the cell assembly that is not adapted to the degree of the variation of the load current of the electric tool may be possibly used. Accordingly, it is important to guide the user so that the user can select a suitable cell assembly meeting the kind or characteristics of the electric tool. Such a technical problem is a problem peculiar to the electric tool that does not appear in other electric devices such as the camera or the OA devices.

### (3) Countermeasure for increased charging time

In the electronic devices such as the camera or the personal computer, even when the cells are connected in parallel, if the cells are charged, the cells are ordinarily individually charged. However, when the battery device 10 used in the electric tool is charged by a battery charger, each battery pack has been hitherto charged. Accordingly, for instance, when the battery pack is charged in which 15 NiCd cells having a nominal voltage of 1.2 V are accommodated, the 15 cells are charged at a time.

As compared therewith, in the battery device formed by the SCAT technology, the number of the battery cells accommodated in the cell assembly is smaller than that of the usual battery device. Accordingly, when a charging operation is carried out for each cell assembly, a charging time is undesirably longer than that of the usual battery device.

On the other hand, a prescribed number of cell assemblies may be charged at the same time. However, since the user employing the battery device using the SCAT technology can arbitrarily select the number of cell assemblies to be used, when only a prescribed number of cell assemblies can be always charged, this is inconvenient for the user. Namely, when the cell assemblies are charged, the arbitrary number of the cell assemblies are desirably charged at a time.

It is an object of the present invention to provide a battery charger that solves the problem (3) of the above-described problems. Specifically, it is an object of the present invention to provide a battery charger that can charge at a time a battery device including an arbitrary number of cell assemblies formed by using a SCAT technology.

For achieving the above-described object, according to one feature of the present invention, a battery charger comprises: an accommodating part for accommodating a group of cells having a plurality of cells and first and second cell assemblies respectively having charging terminals for charging the group of cells; a first terminal plate formed in the surface of the accommodating part to come into contact with the charging terminal of the first cell assembly and a second terminal plate coming into contact with the second cell assembly; a switching element for interrupting voltage from an ac power source; a unit for rectifying and smoothing the voltage interrupted by the switching element; and a unit for applying the smoothed dc voltage respectively to the first and second terminal plates.

According to another feature of the present invention, the battery charger further comprises a first signal terminal for inputting an electric signal corresponding to the temperature of the cell assemblies from the first and second cell assemblies; and a control unit for controlling the interrupting operation of the switching element in accordance with the signal applied to the first signal terminal.

According to a still another feature of the present invention, the battery charger further comprises: a second signal terminal for inputting a signal showing that the cell voltage of the cell assemblies becomes a value not lower than a prescribed value from the first and second cell assemblies; and a control unit for controlling the interrupting operation of the switching element in response to the signal applied to the second signal input terminal.

A still another feature of the present invention resides in that the first and second terminal plates are formed on the bottom surface of the accommodating part, and the accommodating part is formed so as to accommodate the arbitrary number of cell assemblies not smaller than two.

Other features of the present invention will be more apparently understood from a below-described explanation.

According to the present invention, the battery device can be formed by the arbitrary number of cell assemblies, and when the battery device is charged, the arbitrary number of cell assemblies can be charged as a unit. Since the number of the cell assemblies attached to the electric tool is not necessarily equal to the number of the cell assemblies electrified by the battery charger, many cell assemblies can be charged in a short time and the cell assemblies can be individually charged respectively depending on the quantities of charging of the individual cell assemblies.

### Brief Description of the Drawings

Figs.1A - 1D are explanatory views for explaining a concept of the present invention.
Fig. 2A is a view of an external appearance of a usual cordless electric tool.
Fig. 2B is an explanatory view of a circuit of the usual cordless electric tool.
Fig. 3 is a circuit diagram showing one embodiment of a battery device charged by a battery charger of the present invention.
Fig. 4A is a sectional view of one embodiment of a cell assembly forming the battery device charged by the battery charger of the present invention.
Fig. 4B is a side view of the cell assembly forming the battery device charged by the battery charger of the present invention.
Fig. 4C is a sectional view of a connecting part of the cell assemblies forming the battery device charged by the battery charger according to the present invention.
Fig. 4D is a top view of the cell assembly forming the battery device charged by the battery charger according to the present invention.
Fig. 4E is a schematic view of the battery device in which the cell assemblies charged by the battery charger of the present invention are stacked.
Fig. 5A is an electric circuit diagram obtained when a cordless electric tool is connected to the battery device.
Fig. 5B is a sectional view of the cordless electric tool when one cell assembly is connected.
Fig. 5C is a sectional view of the cordless electric tool when two cell assemblies are connected.
Fig. 6A is a sectional view showing one embodiment of the battery charger according to the present invention.
Fig. 6B is an electric circuit diagram of the battery charger according to the present invention.
Fig. 6C is a flowchart showing a control flow of the battery charger according to the present invention.

### Best Mode for Carrying Out of the Invention

Before a battery charger according to the present invention is described, a battery device and an electric tool using the battery device will be described below.

### (1) Structure of battery device

### (1.1) Circuit structure

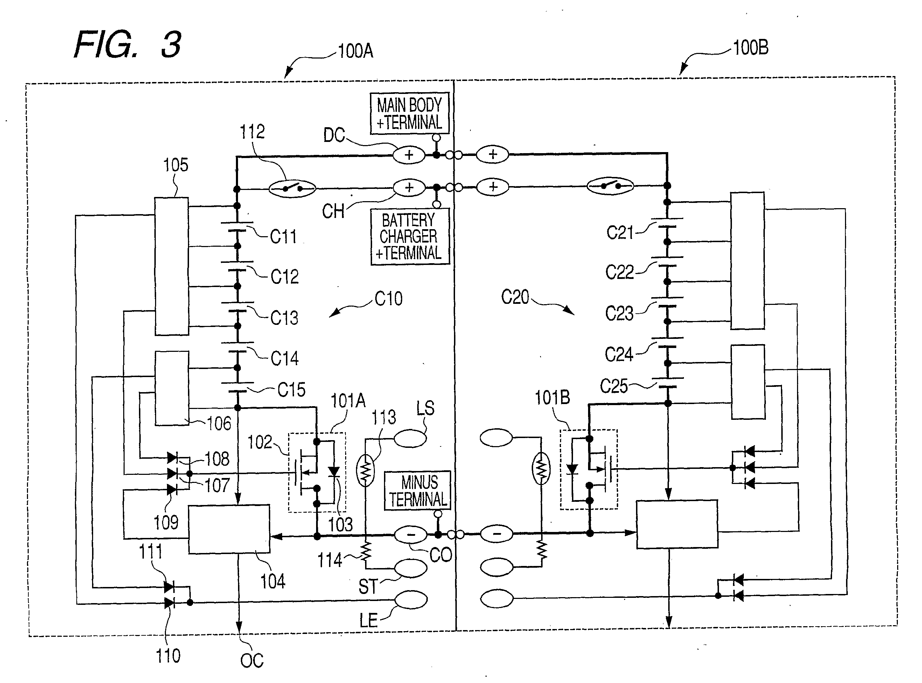

The battery device formed with cell assemblies that is charged by the battery charger of the present invention will be described below. Fig. 3 shows an electric circuit diagram in which cell assemblies 100A and 100B are connected in parallel with each other. Since the electric circuit of the cell assembly 100A is the same as that of the cell assembly 100B, only the electric circuit of the one cell assembly 100A will be described.

The cell assembly 100A includes, in this embodiment, five lithium cells C11 to C15 connected in series. These cells C11 to C15 are generally referred to as a group of cells C10.

An anode terminal of the group of cells C10 is connected to a discharge anode terminal DC and a cathode terminal of the group of cells C10 is connected to a common cathode terminal CO through a switching element 101. In this embodiment, the switching element 101 includes an FET 102 and a diode 103 connected between a source and a drain thereof.

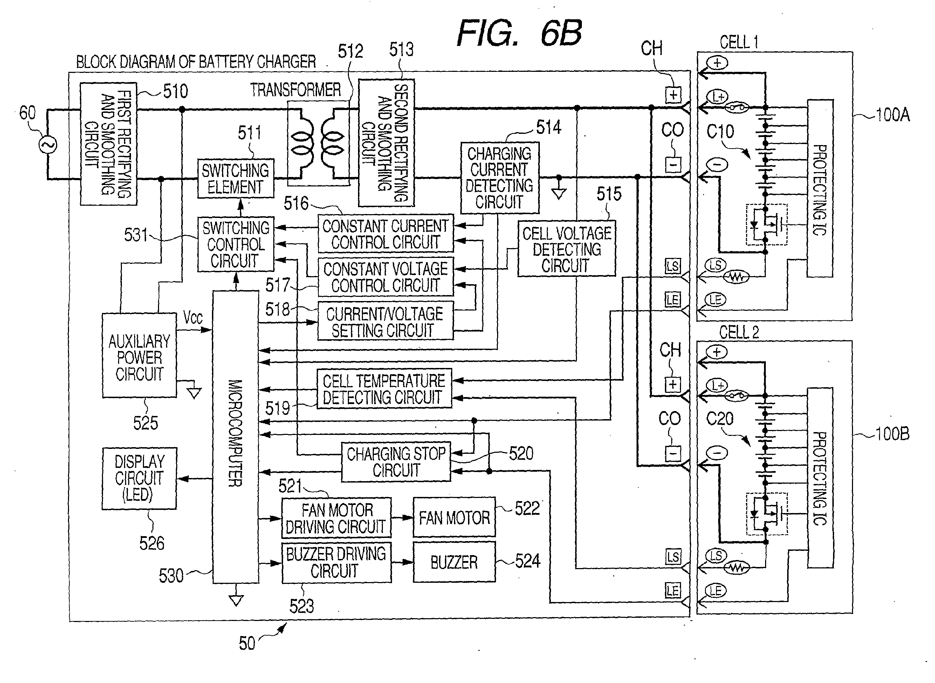

Reference numeral 104 designates an over-current detecting circuit and the over-current detecting circuit is connected to a part between the source and the drain of the switching FET 102 to output a signal proportional to the quantity of a current supplied between the source and the drain. The output signal of the over-current detecting circuit 104 is applied to the gate of the switching FET 102 through a diode 109 and guided to an over-current signal detecting terminal OC. The signal of the terminal OC is applied to the control circuit 204 (Fig. 2B) of a cordless electric tool or a microcomputer 530 (Fig. 6B) of a battery charger 50 as required.

On the other hand, the lithium cells C 11 to C15 are connected to protecting circuits 105 and 106 for protecting the cells. As the protecting circuit, for instance, an IC (MM1414 or MM3090 or the like produced by Mitsumi Electric Co., Ltd.) is used. The protecting IC has four input terminals at maximum. When a voltage not lower than a prescribed level is inputted to any one of the input terminals, an output signal is generated. The output signals of the protecting circuits 105 and 106 are respectively guided to an over-voltage detecting terminal LE through diodes 110 and 111. Further, the signal of the terminal LE is applied to the microcomputer 530 (Fig. 6B) of the below-described battery charger 50. Further, the output signals of the protecting circuits 105 and 106 are respectively applied to the gate of the switching FET 102 through diodes 107 and 108. To the source or the drain of the switching element 101, a thermistor 113 for detecting the temperature of the group of cells C10 is connected. A temperature detecting signal is guided to a signal terminal LS and applied to the microcomputer 530 of the below-described battery charger 50 (Fig. 6B).

Further, a resistance 114 represents the number of the cells of the group of cells C10 and has different resistance values depending on the number of cells. An electric signal corresponding to the resistance value of the resistance 114 is guided to a cell number signal detecting terminal ST and applied to the microcomputer 530 (Fig. 6B) of the below-described battery charger 50. Between the anode terminal of the group of cells C10 and a charging terminal CH, a thermostat 112 is connected. When the temperature of the cell assembly 100A is a prescribed temperature or higher, the thermostat 112 operates to stop a charging operation.

When the cell assembly 100A and the cell assembly 100B constructed as described above are connected in parallel with each other as shown in Fig. 3, if a voltage difference between the group of cells C10 and a group of cells C20 is large like a case that the one group of cells C10 is fully charged and a quantity of charging of the other group of cells C20 is 0, during turning on the FET 102, an over-current may be possibly supplied to a closed circuit including the groups of cells C10 and C20 and switching elements 101A and 101B. Further, when voltage between the terminals DC and CO is supplied to the motor 201 shown in Fig. 2B, if the load of the motor 201 is large, there is a fear that the over-current may be possibly supplied to the cell assemblies 100A and 100B.

However, in the battery device charged by the battery charger of the present invention, when the over-current is supplied to the group of cells C10, the voltage between the source and the drain of the switching element 101 is increased. When the voltage is not lower than a prescribed value, the over-current detecting circuit 104 generates the output signal. The output signal is applied to the gate of the switching FET 102 through the diode 109 to interrupt the FET 102. As a result, the over-current is prevented frombeing supplied to the group of cells C10 to break the group of cells.

Further, when any of the cells of the group of cells C10 is charged to the prescribed value or higher, the output signal is generated from the protecting circuit 105 or 106 to also interrupt the FET 102. Accordingly, the over-charge of the cells C11 to C15 can be also prevented.

### (1.2) Structure of cell assembly

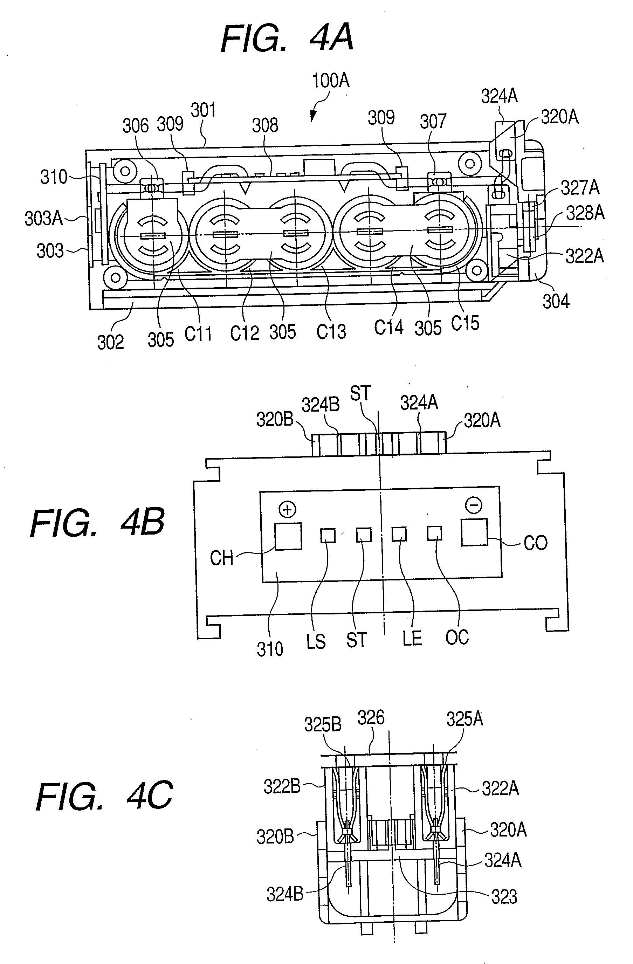

Now, referring to Figs. 4A to and 4E, the structure of the cell assembly charged by the battery charger of the present invention will be described below. As shown in Fig. 4A, a cell accommodating receptacle includes an upper plate 301, a lower plate 302 and both side plates 303 and 304. The five lithium cells C11 to C15 are arranged in the receptacle. The cells C11 to C15 are respectively connected in series by terminal plates 305. The anode of the cell C11 is connected to a terminal 306 and the cathode of the cell C15 is connected to a terminal 307. In a space between the upper plate 301 and the group of cells C11 to C15, a circuit board 308 is disposed and supported by support members 309. On the upper surface of the circuit board 308, the circuit elements 101 to 111 shown in Fig. 3 are mounted.

On the other hand, a charging terminal board 310 is disposed adjacently to the side plate 303. As shown in Fig. 4B, on the terminal board 310, the anode and cathode charging terminals CH and CO and the signal detecting terminals LS, ST, LE and OC are provided. On a part of the side plate 303 in Fig. 4A, an opening part 303A is provided and voltage can be applied to the terminals CH and CO through the opening part 303A.

In the right side plate 304 in Fig. 4A, a first engaging member 320A for engaging the cell assembly 100A with the other cell assembly 100B (not shown in the drawing) is provided so as to move upward and downward. The first engaging member 320Ahas an extending part 327A extending downward in the drawing. The extending part 327A is inserted into a hole part 328A. In the hole part 328A, a spring (not shown in the drawing) is provided to push the first engaging member 230A upward and engage with a second engaging member 322A of another cell assembly described below.

In Fig. 4A, one first engaging member 320A is shown, however, another engaging member is provided in the interior side of a sheet surface. As shown in Fig. 4B, two first engaging members 320A and 320B are provided. The first engaging members 320A and 320B are attached to a support member 323 as shown in Fig. 4C. Two metal plates 324A and 324B are vertically provided on the support member 323.

In the other cell assembly 100B, two engaging members 322A and 322B are attached to a support member 326 and metal plates 325A and 325B are provided in the engaging members 322A and 322B. When the second engaging members 322A and 322B are engaged with the first engaging members 320A and 320B as shown in Fig. 4C, another metal plates 324A and 324B are inserted into the metal plates 325A and 325B so that the two assemblies 100A and 100B are connected together.

As shown in Fig. 4A, the anode terminal 306 of the cell C11 is connected to the metal plates 324A and 325A through wiring on the circuit board 308 and the cathode terminal 307 of the cell C15 is connected to the metal plates 324B and 325B (Fig. 4C). Similarly, the anode terminal (not shown in the drawing) of the cell C21 of the cell assembly 100B is connected to the metal plates 325Aand 324A and the cathode terminal (not shown in the drawing) of the cell C25 is connected to the metal plates 325B and 324B. When the metal plate 324A of the assembly 100A is connected to the metal plate 325A of the assembly 100B and the metal plate 324B of the assembly 100A is connected to the metal plate 325B of the assembly 100B, respectively, the two assemblies 100A and 100B are connected together in parallel.

As described above, the first engaging members 320A and 320B urged upward by the springs are provided with the terminal plates 324A and 324B as discharge terminals, so that a force acts for constantly pressing the metal plates 324A and 324B toward the metal plates 325A and 325B side as the discharge terminals of another cell assembly. Therefore, even when the cordless electric tool vibrates, the contact between the metal plate 324A and 325A, and 324B and 325B can be maintained in a stable way.

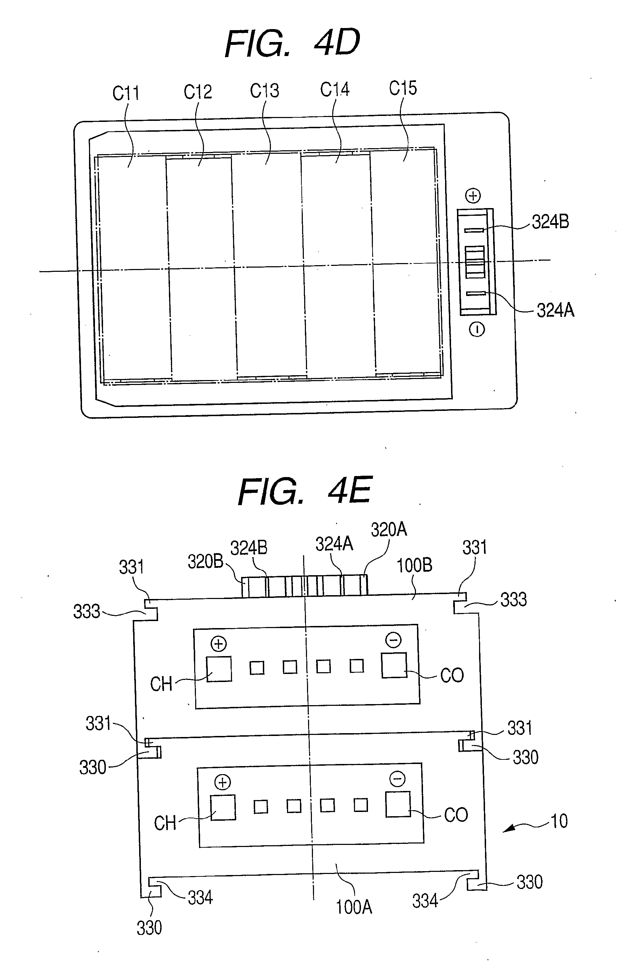

Fig. 4D shows a top view of the cell assembly 100A. The first engaging members having the discharge anode terminal 324A connected to the anode terminal of the cell C11 and the discharge cathode terminal 324B connected to the cathode terminal of the cell C15 are disposed on the upper surface of the cell assembly receptacle. On a lower surface opposed to the upper surface, the second engaging members likewise having the discharge anode terminal 325A and the discharge cathode terminal 325B are arranged.

On the other hand, since the charging terminals of the group of cells C10 are provided on a side surface separate from the upper and lower surfaces of the receptacle, the cell assemblies 100A and 100B can be charged under a state that the cell assemblies 100A and 100B are stacked and connected together in parallel.

Fig. 4E shows the battery device 10 in which the two cell assemblies 100A and 100B are stacked. On the end part of the upper'surface of each of the cell assemblies 100A and 100B, a slide rail including protruding parts 331 and recessed parts 333 is provided. On the end part of the lower surface, a slide rail including protruding parts 330 and recessed parts 334 is provided. The lower slide rail of the cell assembly 100B is engaged with the upper rail of the cell assembly 100A to form the battery device 10 including the two cell assemblies 100A and 100B.

### (2) Structure of electric tool

Now, the cordless electric tool using the above-described battery device will be described below by referring to Fig.5A.

As described above, in the cordless electric tool using the SCAT, a current capacity (Ah) thereof can be selected by a user. However, when the battery device having the current capacity of a prescribed value or higher is not used, the battery device may be possibly damaged depending on tools. For instance, in the case of an electric drill, when the tip tool 30 shown in Fig. 2B engages with a material to be worked, an extremely large current may be supplied to the motor 201. When the current capacity (Ah) of the battery device 10 is small, a serious damage may be possibly given to the cells. Therefore, in an electric tool, a control circuit is provided to control the tool not to operate when a battery device 10 is attached to the electric tool that has a current capacity smaller than a current capacity necessary for the tool.

In an embodiment shown in Fig. 5A, an example is illustrated in which a battery device 10 having three cell assemblies 100A, 100B and 100C is attached to the electric tool main body 20. Between a discharge positive terminal DC and a cathode terminal CO of the battery device 10, a motor 250 and a switching FET 252 are connected in series. Further, the positive terminal DC is connected to the gate of the switching FET 252 and the collector of a transistor 253 through a trigger switch 251 and a resistor 262. The source of the FET 252 and the emitter of the transistor 253 are commonly connected and grounded. Further, the base of the transistor 253 is connected to an output terminal of a control circuit 261.

Reference numeral 254 designates a constant voltage power source and includes a regulator 256 and condensers 255 and 257. The output voltage V0 of the constant voltage power source 254 is supplied to the control circuit 261.

On the other hand, to the cell assemblies 100A, 100B and 100C, resistances 114A, 114B and 114C are respectively connected for discriminating the number of cells as shown in Fig. 3. The resistance 114 has different resistance values depending on the number of cells forming the cell assemblies 100. Accordingly, when the resistance value is detected, the number of the cells forming the cell assembly 100 can be discriminated. In this embodiment, it is assumed that when the number of cells is 5, the value of the resistance 114A, 114B or 114C is R1.

A detecting terminal ST1 of the cell assembly 100C is connected to a detecting terminal ST2 of the cell assembly 100B. The detecting terminals ST1 and ST2 of the cell assembly 100B are respectively connected to the detecting terminals ST2 and ST3 of the cell assembly 100A.

Accordingly, to the detecting terminals ST1, ST2 and ST3 of the cell assembly 100A, the cell number discriminating resistances 114A, 114B and 114C are respectively connected. The detecting terminals ST1, ST2 and ST3 of the cell assembly 100A are respectively connected to a supply voltage terminal D of the control circuit 261 through pull-up resistances 258, 259, and 260 and connected to input terminals A, B and C. Assuming that the values of the pull-up resistances 258, 259 and 260 are respectivelyR2, the output voltage of the constant voltage power source 254 is V0 and the resistance of the cell number discriminating resistance 114 is R1, the voltage of R1/(R1 + R2) V0 is applied to the terminals A, B and C, respectively. Further, when the cell assemblies are not connected together, voltage V0 is applied to the terminals A, B and C.

Assuming that R1 is, for instance, 100 ohm, R2 is 10 ohm, and V0 is 5V, when the cell assemblies 100 are connected together, a voltage near to 0V is applied to the input terminals (A, B,C) . When the cell assemblies are not connected together, a voltage near to 5V is applied to the input terminals (A, B, C). Accordingly, when the voltage applied to the terminals A, B and C is binarized by the threshold value of an intermediate value between 5V and 0V, the number of the connected cell assemblies can be obtained as a binary signal. For instance, assuming that a high level is 1 (high) and a low level is 0 (low), when the terminals (A, B, C) show (0, 1,1), the control circuit 261 can recognize that one cell assemblies is connected. When the terminals (A, B, C) show (0, 0, 1), the control circuit 261 can recognize that the two cell assemblies are connected. When the terminals (A, B, C) show (0, 0, 0), the control circuit 261 can recognize that the three cell assemblies are connected. The control circuit 261 is previously formed so as to output an output signal to an output terminal E in accordance with the terminals (A, B, C). For instance, when the terminals (A, B, C) indicate (0,0, 0) and (0,0,1), E is previously set to be 0 (low). When the terminals (A, B, C) indicate (0, 1, 1) and (1, 1, 1), E is previously set to be 1 (high).

Now, an operation of a circuit shown in Fig. 5A will be described. When a user turns on the trigger switch 251, the positive voltage of the battery device 10 is applied to the gate of the switching FET 252 through the switch 251 and the resistance 262. Thus, the FET 252 is turned on.

On the other hand, the control circuit 261 detects the number of the connected cell assemblies 100 in accordance with the level of the signal inputted to the input terminals A, B and C. Then, when the number of the cell assemblies 100 necessary for the tool 20 are not connected, the signal of 1 is outputted from the output terminal E. The transistor 253 is turned on in accordance with this signal. As a result, a part between the gate and the source of the switching FE2 252 is short-circuited to turn off the FET 252. That is, when the number of the cell assemblies smaller than that previously set to the control circuit 261 are connected, the tool 20 is controlled not to operate.

Fig. 5B shows a sectional view of the electric tool 20. In a main body part 20A, the motor 250 and a speed reducing mechanism 202 or the like are accommodated. To one end of a handle part 20B, the battery device 10 is attached. Further, Fig. 5C shows an example in which the two cell assemblies 100A and 100B are attached as the battery device 10.

### (3) Structure of battery charger

Now, the structure of the battery charger according to the present invention will be described by referring to Figs. 6A and 6B. The battery charger 50 includes a main body 500 and a cell accommodating part 501. The cell accommodating part 501 is formed so as to accommodate a plurality of cell assemblies 100. In this embodiment, an example is shown that the two cell assemblies 100A and 100B can be accommodated, however, any number of cell assemblies not smaller than two may be designed to be accommodated.

On the bottom surface 502 of the cell accommodating part 501, terminal plates 503A and 503B are disposed. In the terminal plates 503A and 503B respectively, terminals are provided that come into contact with the charging anode terminal CH, the charging cathode terminal CO and the signals terminals LS, ST, LE and OC respectively shown in Fig. 4B. On the side surf ace of the cell assembly, the charging terminals CH and CO are provided. The charging terminals are allowed to come into contact with the terminal plates 503A and 503B formed on the bottom surface 502 of the accommodating part 501 so that the battery charger 50 can be made to be compact.

Fig. 6B shows an electric circuit of the battery charger 50. The voltage of a commercial ac power source 60 is converted into a direct current by a rectifying and smoothing circuit 510, and then supplied to a transformer 512 through a switching element 511. The turning on time of the switching element 511 is controlled so that the level of the average voltage of voltage appearing in a secondary winding of the transformer 512 can be controlled.

The voltage of the secondary winding of the transformer 512 is converted again into a direct current by a rectifying and smoothing circuit 513, and then, applied to the charging anode terminal CH and the cathode terminal CO of the cell assemblies 100A and 100B to charge the groups of cells C10 and C20 in these cell assemblies 100A and 100B.

A quantity of charging current corresponding to the sum of the charging current of the cell assembly 100A and the charging current of the cell assembly 100B is detected by a charging current detecting circuit 514 connected to a secondary side of the transformer 512 and applied to the microcomputer 530.

On the other hand, the terminal voltage of the groups of cells C10 and C20 of the cell assemblies 100A and 100B is detected by a cell voltage detecting circuit 515 and applied to the microcomputer 530.

Further, a signal showing the temperature of the groups of cells C10 and C20 of the cell assemblies 100A and 100B is applied to a cell temperature detecting circuit 519 from the terminal LS and an output signal thereof is applied to the microcomputer 530. Further, when an over-voltage detecting signal appears in the signal terminal LE, the signal is applied to the microcomputer 530 and supplied to a charging stop circuit 520 at the same time. When the over-voltage detecting signal is inputted to the charging stop circuit 520, the charging stop circuit 520 transmits an output signal to a switching control circuit 531 to turn off the switching element 511.

To the microcomputer 530, a constant supply voltage Vcc generated by an auxiliarypower circuit 525 is applied. The microcomputer 530 transmits a signal for instructing a setting voltage and a setting current to a current/voltage setting circuit 518 in accordance with various kinds of inputted detecting signals. A constant current control circuit 516 compares the setting current of the setting circuit 518 with the charging current from the charging current detecting circuit 514 to control the switching element 511 to be turned on and off so that the charging current is equal to the setting current. Similarly, a constant voltage control circuit 517 compares the setting voltage of the setting circuit 518 with the cell voltage from the cell voltage detecting circuit 515 to'control the switching element 511 to be turned on and off so that the cell voltage is equal to the setting voltage.

Further, the microcomputer 530 transmits a signal to a display circuit 526 to display a charging operation or transmits a signal to a fan motor driving circuit 521 to drive a fan motor 522. Further, the microcomputer transmits a signal to a buzzer driving circuit 523 to sound a necessary buzzer 524.

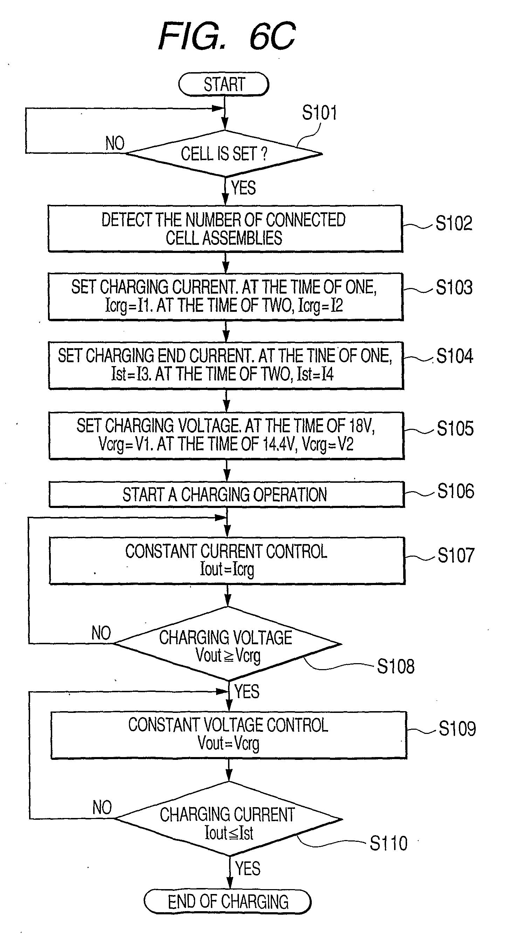

Now, a control flow of the above-described battery charger will be described by referring to Fig. 6C.

Firstly, in step S101, it is decided whether or not the cell assemblies 100A and 100B are set to the battery charger 50. When the cell assemblies 100 are set to the battery charger 50, in step S102, the number of the cell assemblies connected to the battery charger 50 is detected. There are various methods for detecting the number of the cell assemblies. For instance, when signals are inputted to the detecting circuit 519 from two LS terminals, the number of the cell assemblies is considered to be two, and when a signal is inputted from one LS terminal, the number of the cell assemblies is considered to be one.

In step S103, the charging current Icrg is set in accordance with the number of the connected cell assemblies 100'. For instance, when the number of the connected cell assemblies is one, the charging current is set to I1, and when the number is two, the charging current is set to I2. Ordinarily, as 12, a value two times as large as I1 is selected. Further, in step S104, a charging end current when a charging operation is completed is set. When a NiCd cell or a nickel hydrogen cell is charged, a cell voltage or a cell temperature is ordinarily detected to determine timing for finishing the charging operation. However, when a lithium cell is charged, the charging current is detected to determine timing for finishing the charging operation.

In step S105, a charging voltage is set. For instance, when the voltage of the cell assembly 100 is 18V, the charging voltage is set to a value such as V1, and when the voltage of the cell assembly 100 is 14.4 V, the charging voltage is set to a value such as V2.

Then, in step S106, the charging operation is started and a constant current control is initially carried out (S107). That is, a current Iout supplied to the cell assembly 100 is controlled to have a constant current value Icrg. In step S108, it is decided whether or not a charging voltage Vout of the cell assembly 100 reaches a preset charging voltage Vcrg. When the decided result shows YES, the constant current control is changed to a constant voltage control. Namely, when the lithium cell is charged, the constant current control is initially carried out, and after the cell is charged to a prescribed voltage, the constant voltage control is carried out. After the constant current control is changed to the constant voltage control, the charging current Iout of the cell assembly 100 is gradually lowered to decide whether or not the charging current reaches a preset charging end current Ist (S110). When the decided result shows YES, the charging operation is finished.

As described above, in the battery charger of the present invention, the different charging current and charging end current are set depending on the number of cell assemblies to be connected.

In the above described embodiments of the present invention, various modifications may be easily made within a range without changing the basic idea of the present invention and such modifications may be also included in the present invention. For instance, in Fig. 3, the over-current detecting circuit 104 is designed to detect the voltage between the source and the drain of the switching FET 102. However, a fixed resistance may be connected in series to the group of cells C10 to detect voltage between both the ends of the fixed resistance. Further, the switching FET needs to be provided for each of the groups of cells, however, may be provided outside the cell receptacle.

## Claims

1. A battery charger for battery cell assemblies (100A, 100B), the battery charger comprising:
an accommodating part (501) for accommodating a plurality of cell assemblies, each cell assembly including a group of cells connected in series and having a pair of charging terminals (CH, CO) and an engagement member (320A, 320B) adapted to be engaged with another cell assembly for providing stacked cell assemblies;
first and second terminal plates (503A, 503B) formed in the surface of the accommodating part and adapted to come into contact with the charging terminals of the respective first and second cell assemblies ;
a switching element (511) for interrupting voltage from an AC power source (60);
a unit (513) for rectifying and smoothing the voltage interrupted by the switching element; and
a unit for applying the smoothed DC voltage to the first and second cell assemblies via the respective first and second terminal plates.

2. The battery charger according to claim 1, further comprising:
a first signal terminal (LS) for inputting an electric signal corresponding to the temperature of the cell assemblies (100A, 100B) ; and
a control unit (530) for controlling the interrupting operation of the switching element (511) in accordance with the signal applied to the first signal terminal.

3. The battery charger according to claim 1 further comprising:
a second signal terminal (CH) for inputting a signal showing the cell voltage of the cell assemblies (100A, 100B) ; and
a control unit (530) for controlling the interrupting operation of the switching element (511) in response to the signal applied to the second signal input terminal.

4. The battery charger according to claim 1, wherein the first and second terminal plates (503A, 503B) are formed on the bottom surface of the accommodating part (501).

5. A control method for a battery charger according to claim 1, said control method comprising:
detecting (S102) the number of stacked cell assemblies accommodated in the accommodating part;
setting (S103) a charging current corresponding to the detected number of stacked cell assemblies; and
controlling (S107) the interrupting operation of the switching element so as to supply the set charging current to the stacked cell assemblies.

6. The control method for a battery charger according to claim 5, further comprising:
setting (S105) a charging voltage corresponding to the number of the cells;
charging (S106) the cell assemblies with the set charging current and deciding (S108) whether or not the terminal voltage of the cell assemblies reaches the set charging voltage; and
controlling (S109) the switching element so as to apply a constant voltage to the cell assemblies after the terminal voltage reaches the charging voltage.

7. The control method for a battery charger according to claim 6, further comprising:
setting (S104) a charging end current corresponding to the number of the cell assemblies;
comparing (S110) a value of a current supplied to the cell assemblies with that of the set charging end current; and
controlling the switching element so as to stop a charging operation when the current supplied to the cell assemblies reaches the charging end current.

## Patentansprüche

1. Batterieladegerät für Batteriezellanordnungen (100A, 100B), wobei das Batterieladegerät umfasst:
ein Aufnahmeteil (501) zum Aufnehmen mehrerer Zellanordnungen, wobei jede Zellanordnung eine Gruppe von in Reihe geschalteten Zellen enthält und ein paar von Aufladeterminals (CH, CO) sowie ein Eingriffselement (320A, 320B), das dazu ausgelegt ist, mit einer anderen Zellanordnung zur Bildung gestapelter Zellanordnungen in Eingriff zu stehen, aufweist;
eine erste und eine zweite Terminalplatte (503A, 503B), die auf der Oberfläche des Aufnahmeteils gebildet sind und dazu ausgelegt sind, mit den Aufladeterminals der jeweiligen ersten und zweiten Zellanordnungen in Kontakt zu treten;
ein Schaltelement (511) zum Unterbrechen der Spannung von einer Wechselstromquelle (60);
eine Einheit (513) zum Gleichrichten und Glätten der vom Schaltelement unterbrochenen Spannung; und
eine Einheit zum Anlegen der geglätteten Gleichstromspannung an die erste und die zweite Zellanordnung über die jeweiligen ersten und zweiten Terminalplatten.

2. Batterieladegerät nach Anspruch 1, ferner umfassend:
ein erstes Signalterminal (LS) zum Eingeben eines der Temperatur der Zellanordnungen (100A, 100B) entsprechenden elektrischen Signals, und
eine Steuereinheit (530) zum Steuern der Unterbrechungsoperation des Schaltelements (511) gemäß dem auf das erste Signalterminal angewendeten Signal.

3. Batterieladegerät nach Anspruch 1, ferner umfassend:
ein zweites Signalterminal (CH) zum Eingeben eines die Zellspannung der Zellanordungen (100A, 100B) zeigenden Signals; und
eine Steuereinheit (530) zum Steuern des Unterbrechungsvorgangs des Schaltelements (511) auf das Signal hin, dass auf das zweite Signaleingabeterminal angewendet worden ist.

4. Batterieladegerät nach Anspruch 1, wobei die erste und die zweite Terminalplatte (503A, 503B) auf der Bodenfläche des Aufnahmeteils (501) gebildet sind.

5. Steuerverfahren für ein Batterieladegerät nach Anspruch 1, wobei das Steuerverfahren die folgenden Schritte umfasst:
Detektieren (S102) der Anzahl im Aufnahmeteil aufgenommener gestapelter Zellanordnungen;
Einstellen (S103) eines der detektierten Anzahl der gestapelten Zellanordnungen entsprechenden Ladestroms; und
Steuern (S107) des Unterbrechungsvorgangs des Schaltelements, um so den gestapelten Zellanordnungen den eingestellten Ladestrom zuzuführen.

6. Steuerverfahren für ein Batterieladegerät nach Anspruch 5, ferner umfassend die folgenden Schritte:
Einstellen (S105) einer der Anzahl der Zellen entsprechenden Ladespannung;
Aufladen (S106) der Zellanordnungen mit dem eingestellten Ladestrom und Entscheiden (S108), ob die Terminalspannung der Zellanordnungen die eingestellte Ladespannung erreicht oder nicht; und
Steuern (S109) des Schaltelements, um so eine konstante Spannung an die Zellanordnungen anzulegen, nachdem die Terminalspannung die Ladespannung erreicht.

7. Steuerverfahren für ein Batterieladegerät nach Anspruch 6, ferner umfassend die folgenden Schritte:
Einstellen (S104) eines der Anzahl der Zellanordnungen entsprechenden Lade-Endstroms;
Vergleichen (S110) eines Werts eines den Zellanordnungen zugeführten Stroms mit dem des eingestellten Lade-Endstroms; und
Steuern des Schaltelements, sodass eine Ladeoperation gestoppt wird, wenn der den Zellanordnungen zugeführte Strom den Lade-Endstrom erreicht.

## Revendications

1. Chargeur de batterie pour des ensembles de cellules de batterie (100A, 100B), le chargeur de batterie comprenant :
une partie de logement (501) pour loger une pluralité d'ensembles de cellules, chaque ensemble de cellules comprenant un groupe de cellules connectées en série et ayant une paire de bornes de charge (CH, CO) et un élément de mise en prise (320A, 320B) adapté pour être mis en prise avec un autre ensemble de cellules pour former des ensembles de cellules empilés ;
des première et deuxième plaques de borne (503A, 503B) formées dans la surface de la partie de logement et adaptées pour venir en contact avec les bornes de charge des premier et deuxième ensembles de cellules respectifs ;
un élément de commutation (511) pour interrompre la tension provenant d'une source d'alimentation CA (60) ;
une unité (513) pour redresser et lisser la tension interrompue par l'élément de commutation ; et
une unité pour appliquer la tension CC lissée aux premier et deuxième ensembles de cellules par l'intermédiaire des première et deuxième plaques de borne respectives.

2. Chargeur de batterie selon la revendication 1, comprenant en outre :
une première borne de signal (LS) pour entrer un signal électrique correspondant à la température des ensembles de cellules (100A, 100B) ; et
une unité de commande (530) pour commander l'opération d'entrée de l'élément de commutation (511) en fonction du signal appliqué à la première borne de signal.

3. Chargeur de batterie selon la revendication 1 comprenant en outre :
une deuxième borne de signal (CH) pour entrer un signal représentant la tension de cellule des ensembles de cellules (100A, 100B) ; et
une unité de commande (530) pour commander l'opération d'interruption de l'élément de commutation (511) en réponse au signal appliqué à la deuxième borne d'entrée de signal.

4. Chargeur de batterie selon la revendication 1, dans lequel les première et deuxième plaques de borne (503A, 503B) sont formées sur la surface inférieure de la partie de logement (501).

5. Procédé de commande pour un chargeur de batterie selon la revendication 1, comprenant :
la détection (S102) du nombre d'ensembles de cellules empilés logés dans la partie de logement ;
la définition (S103) d'un courant de charge correspondant au nombre détecté d'ensembles de cellules empilés ; et
la commande (S107) de l'opération d'interruption de l'élément de commutation de manière à alimenter le courant de charge défini aux ensembles de cellules empilés.

6. Procédé de commande pour un chargeur de batterie selon la revendication 5, comprenant en outre :
la définition (S105) d'une tension de charge correspondant au nombre des cellules ;
la charge (S106) des ensembles de cellules avec le courant de charge défini et la décision (S108) si la tension de borne des ensembles de cellules atteint ou non la tension de charge définie ; et
la commande (S109) de l'élément de commutation de manière à appliquer une tension constante aux ensembles de cellules une fois que la tension de borne a atteint la tension de charge.

7. Procédé de commande pour un chargeur de batterie selon la revendication 6, comprenant en outre :
la définition (S104) d'un courant de fin de charge correspondant au nombre des ensembles de cellules ;
la comparaison (S110) d'une valeur d'un courant fourni aux ensembles de cellules à celle du courant de fin de charge défini ; et
la commande de l'élément de commutation de manière à arrêter une opération de charge lorsque le courant fourni aux ensembles de cellules atteint le courant de fin de charge.
